# EUROPEAN PATENT SPECIFICATION

(11) **EP 2 966 592 B1**
(45) Date of publication and mention of the grant of the patent: **28.06.2023**
(21) Application number: 15175538.6
(22) Date of filing: 06.07.2015
(51) Int. Cl.: G06V 40/16, G08B 13/196, H04N 5/21

(54) **FACE RECOGNITION APPARATUS AND METHOD FOR RECOGNIZING FACE**
VORRICHTUNG UND VERFAHREN ZUR GESICHTSERKENNUNG
DISPOSITIF ET PROCÉDÉ POUR UNE RECONNAISSANCE FACIALE

(30) Priority: 07.07.2014 JP 2014139776
(43) Date of publication of application: 13.01.2016
(73) Proprietor: Toshiba TEC Kabushiki Kaisha, Tokyo 141-8562 (JP)
(72) Inventor: KOBAYASHI, Tohru, Shinagawa-ku, Tokyo 141-0032 (JP)
(74) Representative: Bandpay & Greuter

(56) References cited:
- EP-A1- 2 375 216
- JP-A- 2011 154 721
- US-A1- 2011 074 970
- US-A1- 2011 090 360
- US-A1- 2012 081 385
- US-A1- 2014 036 104
- US-B1- 6 272 231

## Description

### FIELD

Embodiments described herein relate to a face recognition apparatus and a method for recognizing a face.

### BACKGROUND

In recent years, a manager of a store such as a department store or a supermarket uses a face recognition to protect the store from a theft or a shoplifter such that faces of men and women taken by a camera arranged in the store are recognized and the recognized faces are followed up or traced within the store. Further, such tracing information is processed into a database to grasp movement pattern thereof in the store.

The face-tracing is realized such that the face of a person moving in a store is recognized or traced through an in-store monitoring device based on the images of faces captured by a camera. However, if the store is so crowded, recognized face images are changed with one to another when two target persons are crossed, which impairs the continuity of the tracking on a person, resulting in that it is sometimes difficult to track a person by the device correctly. Further, in a case in which the recognized face image is of a specific person such as a confirmed shoplifter, it is desired that the device tracks the specific person correctly. Moreover, to track a person correctly, it is expected that the device captures face images from the front side of a person.

Document US 2014/036104 A1 discloses a photographing apparatus that picks up an image of an object to acquire image data; judges a particular part of the object in the image shown based on the image data; changes over time the particular part of the object and changes a photographing condition in accordance with the judgement.

Document EP 2375216 A1 discloses a system for generating an image of contoured surface.

Document US 2011/074970 A1 discloses an image processing apparatus that detects object regions from input images.

### BRIEF DESCRIPTION OF DRAWINGS

Fig. 1 is a diagram illustrating a system consisting of each apparatus according to an embodiment of the present invention;
Fig. 2 is a block diagram illustrating the hardware structure of a store computer; Fig. 3 is a memory map illustrating the memory structure of the memory unit of a store computer; Fig. 4 is a memory map illustrating the memory structure of the memory unit of a store computer;
Fig. 5 is a memory map illustrating the memory structure of the memory unit of a store computer;
Fig. 6 is a functional block diagram illustrating the functional structure of a store computer;
Fig. 7 is a flowchart illustrating the control processing of a store computer;
Fig. 8 is a flowchart illustrating a part of the control processing of a store computer;
Fig. 9 is a flowchart illustrating a part of the control processing of a store computer;
Fig. 10 is a flowchart illustrating a part of the control processing of a store computer;
Fig. 11 is a diagram exemplifying an image displayed by the display unit of a store computer; and
Fig. 12 is a diagram exemplifying an image displayed by the display unit of a store computer.

### DETAILED DESCRIPTION

In accordance with one embodiment of the present invention, a face recognition apparatus having the features as set out in claim 1.

The control unit determines that the specific condition is met if it is determined that the recognized faces of more than two persons contained in the same image input at the first frame rate are within a given distance.

Preferably, the face recognition apparatus further comprises: a calculation unit configured to count the number of pixels constituting the face; and a number of pixels determination unit configured to determine whether or not a difference between the numbers of pixels constituting the recognized faces of the more than two persons is above a specified value, wherein the control unit determines that the specific condition is not met if it is determined that the difference between the numbers of pixels constituting the recognized faces of the more than two persons is above the specified value.

Preferably, the face recognition apparatus further comprises: a calculation unit configured to counting the number of pixels constituting the face; and a number of pixels determination unit configured to determine whether or not a difference between the numbers of pixels constituting the recognized faces of the more than two persons is above a specified value, wherein the control unit determines that the specific condition is not met if it is determined that the difference between the numbers of pixels constituting the recognized faces of the more than two persons is above the specified value.

Preferably, the face recognition apparatus further comprises: a specific face storage unit configured to store the face of a specific person; and a specific face determination unit configured to determine whether or not the face recognized by the face recognition unit is identical to the stored face of the specific person, wherein the control unit determines that the specific condition is met if the specific face determination unit determines that the face recognized by the face recognition unit is identical to the face of the specific person.

The face recognition apparatus further comprises: a face tracking unit configured to track, if the recognized face is identical to a recognized face contained in the images input thereafter; and a front face determination unit configured to determine whether or not the tracked face is photographed substantially from the front side of a person,wherein the control unit determines that the specific condition is met if the front face determination unit determines that the tracked face is not photographed from substantially the front side of a person.

The invention further relates to a method for recognizing a face, as set out in claim 4.

The method further includes determining that the specific condition is met if it is determined that the recognized faces of more than two persons contained in the same image input at the first frame rate are within a given distance.

Preferably the method further comprises: calculating by counting the number of pixels constituting the face; determining a number of pixels by determining whether or not a difference between the numbers of pixels constituting the recognized faces of the more than two persons is above a specified value; and determining that the specific condition is not met if it is determined that the difference between the numbers of pixels constituting the recognized faces of the more than two persons is above the specified value.

Preferably the method further comprises: storing a specific face by storing the face of a specific person; determining a specific face by determining whether or not the face recognized at the face recognizing step is identical to the stored face of the specific person; and determining that the specific condition is met if, at the determining a specific face step, the face recognized at the face recognizing step is determined as identical to the face of the specific person.

The method further comprises: tracking a face by tracking, if the recognized face is identical to a recognized face contained in the images input thereafter; determining a front face by determining whether or not the tracked face is photographed substantially from the front side of a person, and determining that the specific condition is met if the tracked face is determined as being not photographed from substantially the front side of a person at the front face determining step.

The invention also relates to a computer program for performing the method according to any one of claims 4 to 6 on a computer.

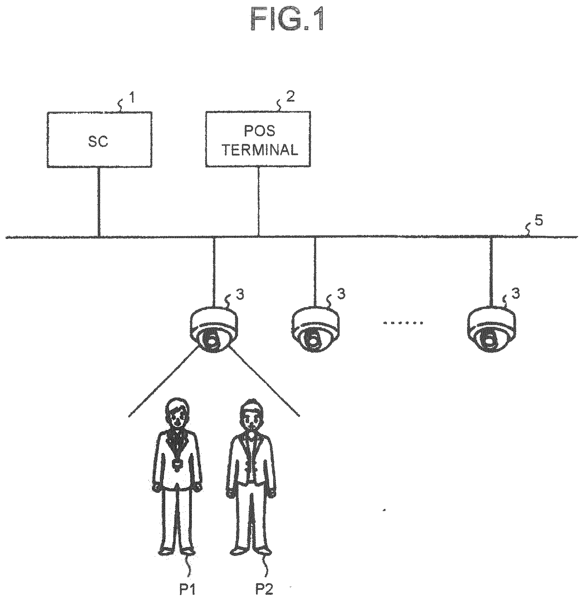

The face recognition apparatus disclosed herein are described below in detail with reference to Fig. 1 to Fig. 12. Further, although a Store Computer (herein after referred to as an SC) installed in a store such as a department store or a supermarket is described below as an example of the face recognition apparatus in the following embodiments, these embodiments are not to be construed as limiting the present invention.

Fig. 1 is a systemic diagram illustrating the connection relationship among the apparatuses of a system according to the embodiment. In Fig. 1, a system comprises: an SC 1, a Point Of Sales (POS) terminal 2 and a plurality of cameras 3. The apparatuses are connected with each other via the communication line 5 of, for example, a Local Area Network (LAN).

The POS terminal 2 registers the sales of commodities purchased in a store. Further, the POS terminal 2 generates commodity sales registration information and sends the generated commodity sales registration information to the SC 1 via the communication line 5.

The SC 1 collects and manages the commodity sales registration information received from the POS terminal 2. Further, the SC 1 stores the commodity information, for example, the prices and names of the commodities in the store. Further, the SC 1 inputs the images captured by the camera 3, and tracks a person moving or looking for in the store based on the images input to manage the trace information.

To photograph a person moving in the store, the plurality of cameras 3 are arranged on, for example, the ceiling close to a lane or a customer-passage between shelves, along the lane at given intervals. To photograph a person moving in the lane from substantially the front side of the person, the cameras 3 are oriented towards the persons moving in the lane from the ceiling. With the plurality of cameras 3, the movement route of the person in the store can be photographed from the moment the person enters the store to the moment the person leaves the store. In the present embodiment, several numbers (n) of the cameras 3 are arranged along the lanes in the store to photograph persons P1 and P2, for example.

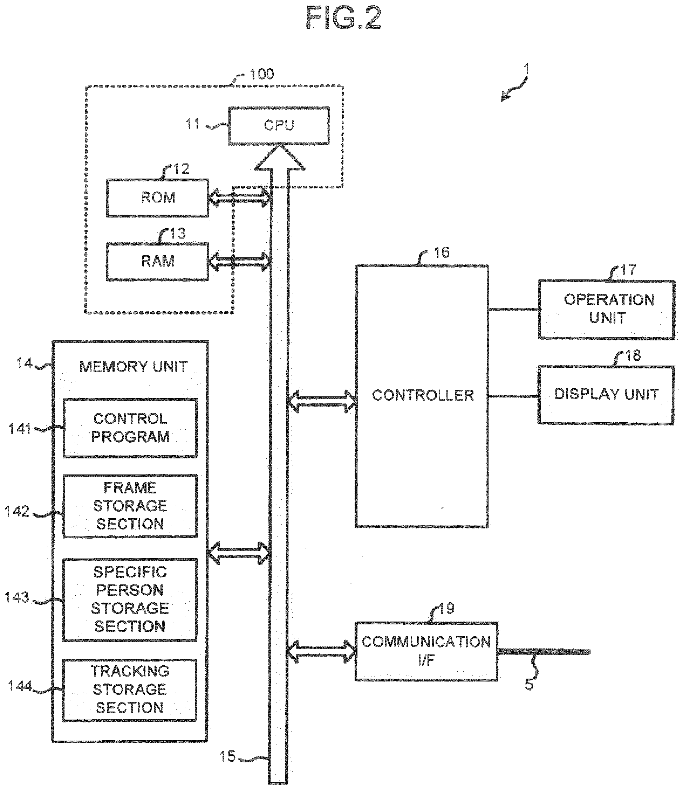

Fig. 2 is a block diagram illustrating the hardware structure of the SC 1. In Fig. 2, the SC 1 comprises a CPU 11 (Central Processing Unit) serving as a control main body, a ROM 12 (Read Only Memory) for storing various programs, a RAM 13 (Random Access Memory) for developing various data and a memory unit 14 for storing various programs. The CPU 11, the ROM 12, the RAM 13 and the memory unit 14 are connected with each other via a data bus 15. The CPU 11, the ROM 12 and the RAM 13 constitute a control section 100. The CPU 11 operates according to a control program 141, which is stored in the ROM 12 or the memory unit 14, developed or expanded on the RAM 13, thereby executing the following control processing.

In addition to developing a variety of programs including the control program 141, the RAM 13 further stores images captured by the camera 3 temporarily until the images are stored in the memory unit 14.

The memory unit 14 including a non-volatile memory such as an HDD (Hard Disc Drive) or flash memory capable of keeping stored information even if power is shut off stores programs including the control program 141. Further, the memory unit 14 comprises a frame storage section 142 in which images captured by the camera 3 are input and frames subject to a face recognition processing are stored for each frame, for example, the frame storage section stores each part of the face image of a specific person who committed a crime. The memory unit 14 comprises a specific person storage section 143 capable of specifying the face of a specific person, and a tracking storage section 144 for tracking a face-recognized person to store trace information. Further, the memory unit 14 stores a distance flag, a same face flag and a front side flag which are described later.

Further, the data bus 15 is connected with an operation unit 17 and a display unit 18 via a controller 16.

The operation unit 17 is equipped with numeric keys for inputting numerals and various function keys. In addition to various kinds of information, the display unit 18 also displays images of interior of a store input from the camera 3. The display unit 18 displays images captured by a specified camera 3. Further, the display unit 18 divides a screen for images taken by different cameras 3 so as to display the images on the same screen at a time.

Further, the data bus 15 is connected with a communication I/F (Interface) 19 such as a LAN I/F. The communication I/F 19 is connected with the communication line 5. The communication I/F 19 receives images taken by the camera 3.

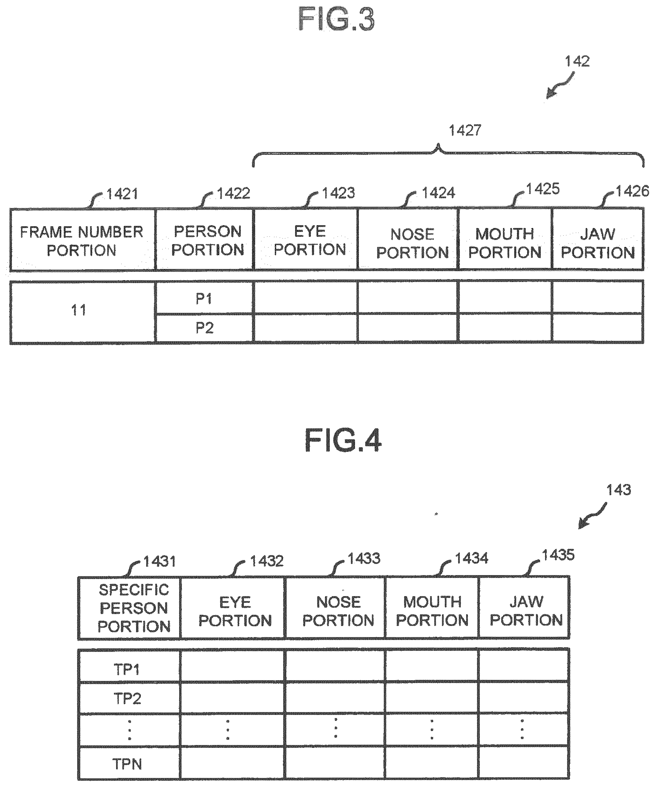

Fig. 3 is a memory map illustrating the frame storage section 142. The frame storage section 142 stores the image of each face part of a person, whose face is recognized based on the frame images input from the camera 3, for each part corresponding to the recognized person. Further, the frame storage section 142 stores a recognized image corresponding to a new frame image shown in Fig. 3 every time the frame image is input.

A face recognition technology, which is a well-known technology for recognizing the face of a person, divides a recognized face into each part such as, eyes, nose, mouth, and jaw, to acquire the features of each part of the recognized face based on the image information of each face part and then recognizes the face of a person as a whole. Further, face recognition technology is a well-known technology of recognizing the face of a person by recognizing eyes, nose, mouth and the like from the input image. Further, the face part refers to the part/parts reflecting the features of a face but not necessarily includes all of eyes, nose, mouth and jaw. Further, the face parts may further include other parts in addition to eyes, nose, mouth and jaw. Moreover, the face part may be other parts of a face, but not eyes, nose, mouth and jaw.

In Fig. 3, the frame storage section 142 comprises a frame number portion 1421, a person portion 1422, an eye portion 1423, a nose portion 1424, a mouth portion 1425 and a jaw portion 1426. The frame number portion 1421 stores a frame number for designating a frame from the input frame images. The frame number is automatically assigned to the input image. The person portion 1422 stores the face of each person, recognized from input image, which is taken in the image. In the example shown in Fig. 3, the faces of persons P1 and P2 are recognized and stored. Further, the eye portion 1423, the nose portion 1424, the mouth portion 1425 and the jaw portion 1426 are collectively referred to a part portion 1427.

The eye portion 1423 stores image information of the eye part of a recognized face. The nose portion 1424 stores image information of the nose part of the recognized face. The mouth portion 1425 stores image information of the mouth part of the recognized face. The jaw portion 1426 stores image information of the jaw part of the recognized face. For example, the control section 100 grasps the face feature of a person P1 by acquiring the features of each image information of the face parts, i.e., eyes, nose, mouth and jaw, stored corresponding to the person P1. Similarly, the control section 100 grasps the features of the face of a person P2. In this way, the control section 100 distinguishes the face of the person P1 from that of the person P2.

Fig. 4 is a memory map illustrating the specific person storage section 143. The specific person storage section 143 stores the face parts showing a specific person, in other words, the features of the face of the specific person. The specific person refers to, for example, a person who commits a criminal, such as a shoplifting, which brings damages or bad influence to the store, or a superior customer who contributes to the store in the number of times of purchasing commodities or in the purchasing amount in the store. If a specific person who commits such a criminal comes to the store, the manager of the store needs to strengthen the monitoring to the specific person. On the other hand, if a superior customer comes to the store, the manager of the store needs to know the location of the customer to provide special services and valuable notices for the customer.

In Fig. 4, the specific person storage section 143 comprises a specific person portion 1431, an eye portion 1432, a nose portion 1433, a mouth portion 1434 and a jaw portion 1435. The specific person portion 1431 stores personal information of a specific person, for example, the name, the age and the gender of the specific person. The eye portion 1432 stores image information of the eyes of the specific person. The nose portion 1433 stores image information of the nose of the specific person. The mouth portion 1434 stores image information of the mouth of the specific person. The jaw portion 1435 stores image information of the jaw of the specific person. For example, the control section 100 can grasp the face feature of a specific person TP1 based on the eye image information, the nose image information, the mouth image information and the jaw image information correspondingly stored in the eye portion 1432, the nose portion 1433, the mouth portion 1434 and the jaw portion 1435 for the specific person TP1.

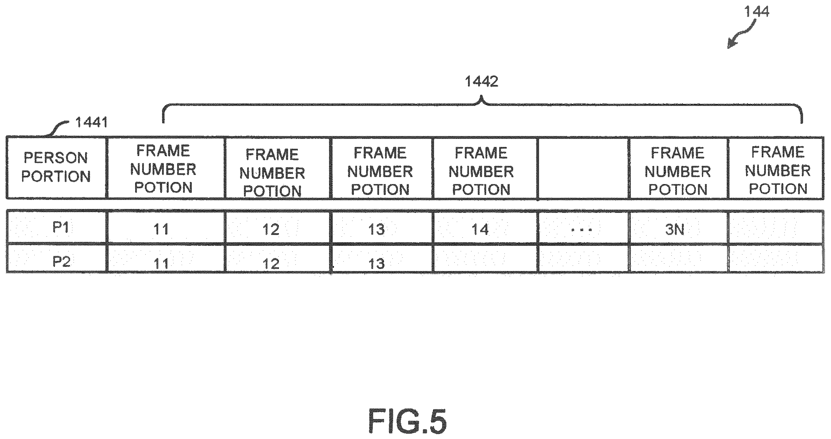

Fig. 5 is a memory map illustrating the tracking storage section 144. If the face recognized from input images (hereinafter referred to as frames) and the face recognized from the former frames belong to the same person, then all the frames from which the face is recognized are additionally stored in the tracking storage section 144 in correspondence with the recognized person. The control section 100 analyzes the stored frames to acquire the movement route of the person in the store, thereby tracking the movement range of the person in the store. Additionally, the flow of customers and the staying or stopping condition of customers in the store can be grasped based on the accumulated movement range information, thereby making a sales strategy based on the flow of customers.

In Fig. 5, the tracking storage section 144 comprises a person portion 1441 and a frame number portion 1442. The person portion 1441 stores a person continuously recognized from input frames. In the example shown in Fig. 5, persons P1 and P2 are stored in the person portion 1441. The frame number portion 1442 stores the frame numbers of the frames from which the face of the person is recognized corresponding for each person.

In the embodiment, the frame numbers 11-1N are respectively assigned to the frames input from a first camera 3 arranged in the store. The frame numbers 21-2N are respectively assigned to the frames input from a second camera 3 arranged in the store. By respectively assigning frame numbers to frames, which one of the n cameras 3 arranged in the store captures the frames stored in the tracking storage section 144 can be specified. Therefore, which lane or flow-path the person walks in the store can be specified by analyzing the frame numbers of the frames stored in the tracking storage section 144 by the control section 100.

In the example shown in Fig. 5, frames of the frame numbers 11 to 3N are continuously stored for the person P1, meaning that the image of the face of the person P1 is continuously captured by a first to a third camera 3. Thus, it can be known that the person P1 moves in the store from the position where the first camera 3 is arranged or located to the position where the third camera 3 is arranged through the position where the second camera 3 is arranged.

Further, frames of frame numbers 11 to 13 are continuously stored for the person P2, meaning that the image of the face of the person P2 is captured by the first camera 3, thus, it can be known that the person P2 moves nearby the first camera 3.

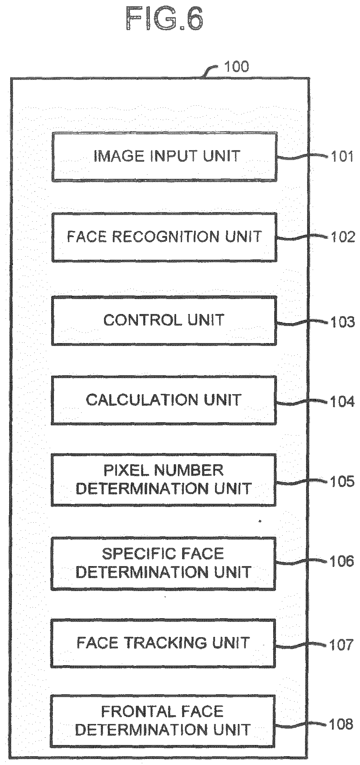

Sequentially, the control processing of the SC 1 is described below with reference to Fig. 6 to Fig. 12. Fig. 6 is a functional block diagram illustrating the functional structure of the SC 1. The control section 100 functions as an image input unit 101, a face recognition unit 102, a control unit 103, a calculation unit 104, a number of pixels determination unit 105, a specific face determination unit 106, a face tracking unit 107 and a front face determination unit 108 according to various programs including the control program 141 stored in the ROM 12 and the memory unit 14.

The image input unit 101 has a function of inputting the images captured by the camera 3 at a first frame rate or a second frame rate higher than the first frame rate.

The face recognition unit 102 has a function of recognizing the face of a person contained in the input images.

The control unit 103 has a function of changing the interval at which images are input from the first frame rate to the second frame rate if a specific condition on the tracking of the face recognized from the images input at the first frame rate is met.

The calculation unit 104 has a function of counting the number of pixels constituting a face.

The number of pixels determination unit 105 has a function of determining whether or not the difference between the respective number of pixels constituting respective faces of more than two persons recognized is above a certain value.

The face determination unit 106 has a function of determining whether or not the face recognized by the face recognition unit 102 is identical to the face of a specific person whose identity is stored.

The face tracking unit 107 has a function of tracking a recognized face if the recognized face is identical to a recognized face contained in the images input thereafter.

The front face determination unit 108 determines whether or not there is a face photographed from substantially the front side of a person in the tracked faces.

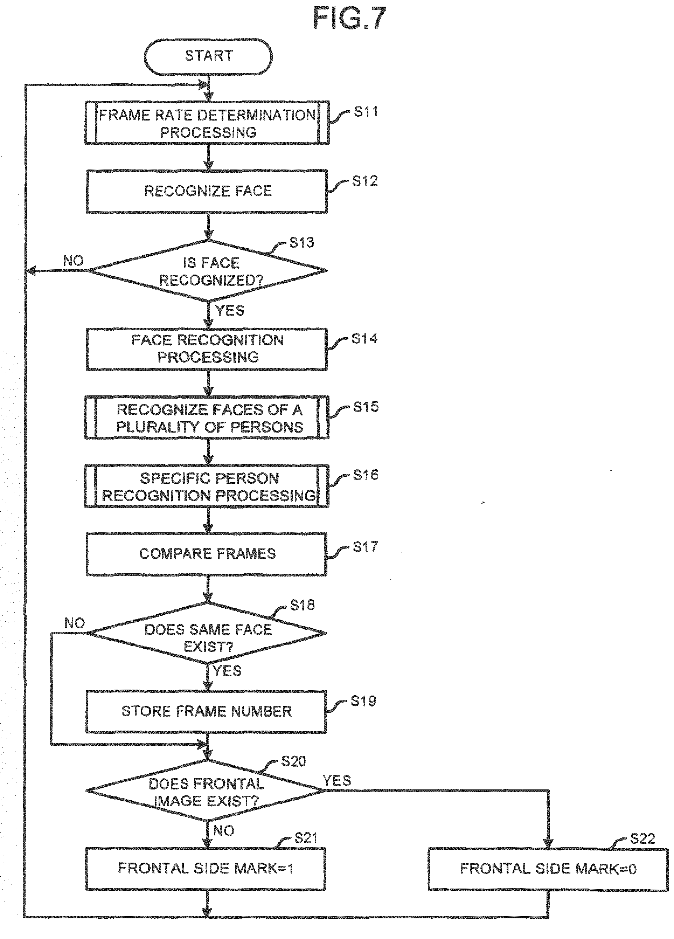

Fig. 7 to Fig. 10 are flowcharts illustrating the control processing of the SC 1. The control section 100 independently carries out the following control processing based on input image information.

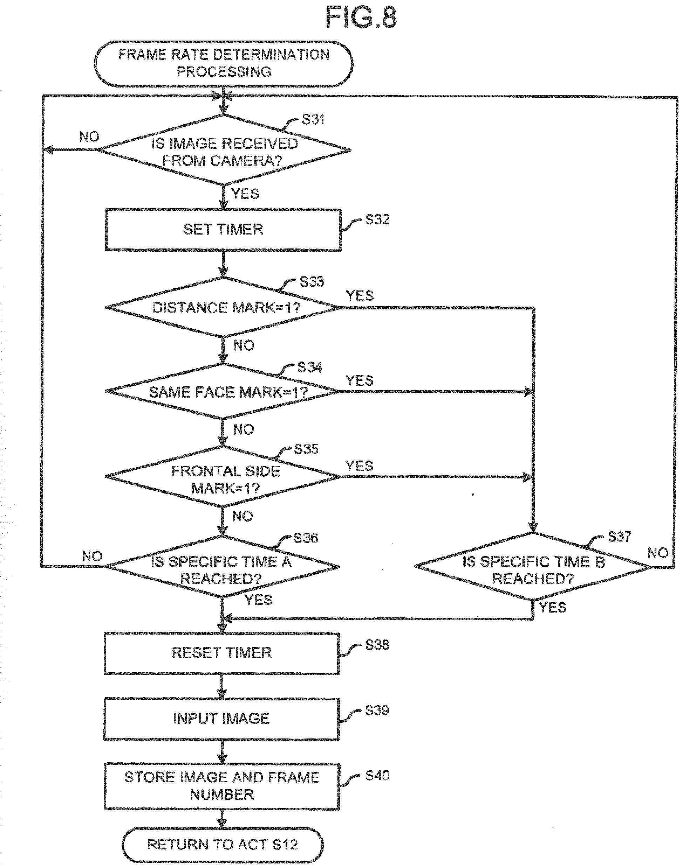

Fig. 7 is a flowchart schematically illustrating the whole control processing of the SC 1. In Fig. 7, the control section 100 carries out a processing of determining a frame rate acting as a timing of inputting the images taken by the camera 3 (Act S11). This processing is described below in detail with reference to Fig. 8.

In Fig. 8, the control section 100 determines whether or not the images taken by the camera 3 are received (Act S31). The control section 100 is standby if the images taken by the camera 3 are not received (Act S31: No) or sets a timer (Act S32) if the images taken by the camera 3 are received (Act S31: Yes).

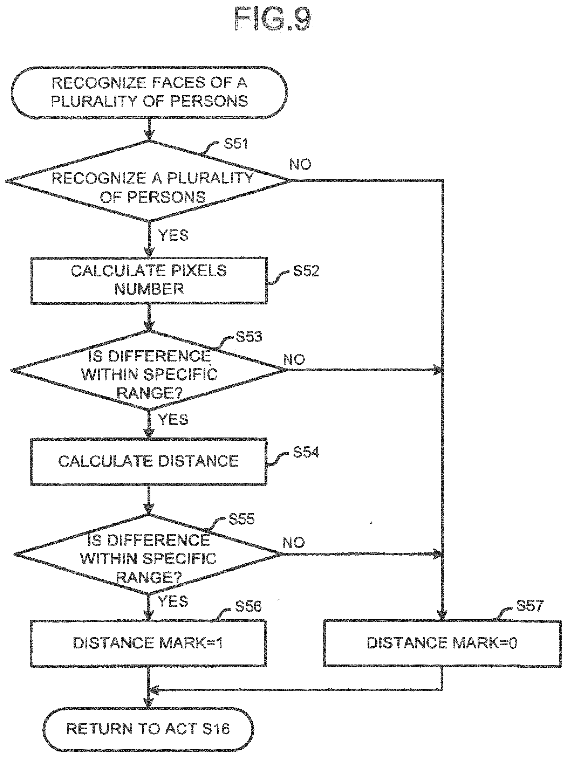

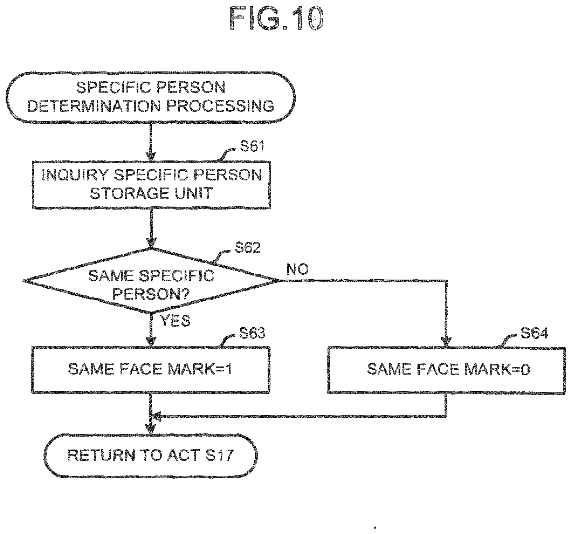

Next, the control section 100 determines whether or not a distance flag (illustrated in detail in Fig. 9) is '1' (Act S33). In a case in which it is determined that the distance flag representing a plurality of face-recognized face images are within a specific distance is not '1' (Act S33: No), the control section 100 determines whether or not an identical face flag (illustrated in detail in Fig. 10) representing that a face-recognized face image is identical to the face image of a specific person is '1' (Act S34). If it is determined that the identical face flag is not '1' (Act S34: No), the control section 100 determines whether or not a front side flag representing that a face-recognized face image is an image substantially taken from the front side of a person (illustrated in detail in Fig. 7) is '1' (Act S35). If it is determined that the front side flag is not '1' (Act S35: No), the control section 100 determines whether or not the time counted by the timer set in Act S32 elapses a specific time A (e.g. 500ms), i.e., the first frame rate (Act S36).

If it is determined that the time counted by the timer elapses the specific time A (e.g. 500ms) (Act S36: Yes), the control section 100 resets the timer set in Act S32 (Act S38). Next, the control section 100 inputs the images received by the communication I/F 19 (Act S39). That is, if it is determined that the distance flag is not '1', the identical face flag is not '1' and the front side flag is not '1', the control section 100 inputs images at a frame rate of the specific time A which is set to be a long interval at which images are read. Then, the control section 100 stores the input images in the person portion 1422 of the frame storage section 142 (Act S40). When storing the image, the control section 100 assigns a unique frame number specifying the image to the image.

Further, if it is determined that the distance flag is '1' (Act S33: Yes), the control section 100 determines whether or not the time counted by the timer set in Act S32 elapses a specific time B (e.g. 100ms), i.e., the second frame rate, shorter than the specific time A. (Act S37). If also the control section 100 determines that the identical face flag is '1' (Act S34: Yes), or the control section 100 determines that the front side flag is '1' (Act S35: Yes), then Act S37 is executed. If it is determined that the time counted by the timer elapses the specific time B shorter than the specific time A (Act S37: Yes), the control section 100 executes Act S38. That is, if it is determined that the distance flag is '1', the identical face flag is '1', or the front side flag is '1', the control section 100 inputs captured images at a frame rate of the specific time B which is shorter than the specific interval A at which images are read.

Further, if it is determined that the specific time A is not elapsed in Act S36 (Act S36: No) or the specific time B is not elapsed in Act S37 (Act S37: No), the control section 100 returns to execute Act S31.

Returning to Fig. 7, the control section 100 recognizes the existence of a face according to whether or not eyes, nose, mouth and jaw are contained in the frames stored in the frame storage section 142 (the images which are input every interval at the specific time A and the images which are input every interval at the specific time B) (Act S12). Sequentially, the control section 100 determines whether or not a face is recognized based on the result of the face recognition (Act S13). If it is determined that a face is recognized (Act S13: Yes), the control section 100 stores the image information of each face part of the recognized face in the part portion 1427 of the frame storage section 142 for each person and carries out a face recognition processing (Act S14). Besides, if it is determined that no face is recognized (Act S13: No), the control section 100 returns to execute Act S11.

Then, the control section 100 recognizes faces of a plurality of persons (Act S15). This processing is described with reference to Fig. 9. In Fig. 9, the control section 100 determines whether or not faces of a plurality of persons are recognized (Act S51). If it is determined that faces of a plurality of persons are recognized (Act S51: Yes), the control section 100 calculates the number of pixels having a constant area in a certain region constituting a face in the plurality of faces (Act S52)

If the number of pixels in each recognized face is within a specific range (that is, the number of pixels between the recognized faces is approximately equal to one another), then it can be determined that the faces are positioned substantially side by side (that is, the distances between each face and the camera 3 are substantially equal). On the other hand, if the difference in the number of pixels between the recognized faces is beyond a certain range, it can be determined that the distance of the face having a smaller number of pixels is farther from the camera 3 than the face having a greater number of pixels.

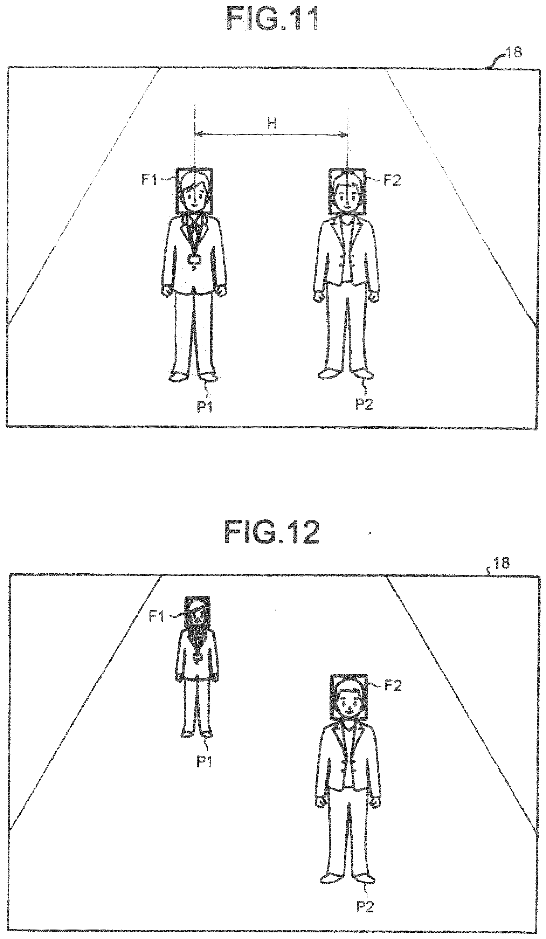

Fig. 11 and Fig. 12 are diagrams illustrating two different input frame images from both of which persons P1 and P2 are recognized. In Fig. 11, the difference between the number of pixels contained in the area F1 constituting the face of the person P1 and the number of pixels contained in the area F2 constituting the person P2 is within a specific range (almost equal). Thus, the control section 100 determines that the faces of persons P1 and P2 are positioned substantially side by side.

On the other hand, in Fig. 12, the control section 100 determines that the faces of the persons P1 and P2 are positioned not side by side but the face of the person P1 is farther than that of the person P2. This is because that the number of pixels contained in the area F1 constituting the face of the person P1 is smaller beyond a given range than those contained in the area F2 constituting the face of the person P2.

Returning to Fig. 9, the control section 100 determines whether or not the difference of the calculated number of pixels is within a specific range (Act S53). If it is determined that the difference is within the specific range (Act S53: Yes), the control section 100 calculates the distance H between the faces (Act S54). The distance H between the plurality of faces is calculated based on the distance between the same face parts on the plurality of faces. In the embodiment, the coordinates of the face parts constituting each face are stored in the face recognition in Act S14. Thus, in Act S54, the distance between the plurality of faces is calculated based on the coordinates of the same face parts on different faces.

For example, a distance between the noses of the persons P1 and P2 is calculated based on the coordinates (X-coordinates) of the noses of the persons P1 and P2. The distance between the noses is determined as a distance between the faces of the persons P1 and P2. Further, a distance between any pair or more than one pair of the left eyes, the right eyes, the mouths and the jaws on two faces can be calculated as the distance between the two faces. Further, the coordinates (Y-coordinates) of the same face parts on the plurality of the faces may be used for determining whether or not the plurality of faces are positioned side by side.

Sequentially, the control section 100 determines whether or not the plurality of faces are positioned within a predetermined distance (e.g. within 1m) of each other based on the calculated face distance (Act S55).If it is determined that the plurality of faces are within the predetermined distance (Act S55: Yes), the control section 100 determines that the persons are closely positioned each other. In this case, to correctly trace the persons who are closely positioned each other, the frame rate at which images are input through the communication I/F 19 should be increased (the time interval at which images are read is shortened). Thus, the control section 100 sets the distance flag stored in the memory unit 14 to be '1'.

Further, if the control section 100 determines that the faces of a plurality of persons are not recognized (Act S51: No), then the control section 100 sets the distance flag stored in the memory unit 14 to be '0' (Act S57). If it is determined that the calculated difference of the number of pixels is not within a specific range in Act S53 (Act S53: No) and also that the plurality of faces are not within a predetermined distance (Act S55: No), the control section 100 executes Act S57.

Returning to Fig. 7, the control section 100 executes the following specific person recognition processing of recognizing whether or not the recognized face is the face of a specific person (Act S16). This processing is described below with reference to Fig. 10.

First, the control section 100 compares each face part stored in the frame storage section 142 with each face part of the face of a specific person stored in the specific person storage section 143 (Act S61). The control section 100 determines whether or not each face part stored in the frame storage section 142 is identical to each face part (corresponding part) of the face of any one of the specific persons stored in the specific person storage section 143 based on the result of the comparison (Act S62).

If it is determined that each face part stored in the part portion 1427 of the frame storage section 142 is identical to each face part of the face of a specific person stored in the specific person storage section 143, the control section 100 determines that the face stored in the frame storage section 142 is identical to the face of a specific person stored in the specific person storage section 143 (Act S62: Yes). Then, the control section 100 sets the identical face flag stored in the memory unit 14 to be '1' (Act S63).

On the other hand, if it is determined that the face parts stored in the part portion 1427 of the frame storage section 142 are different from those of the face of each specific person stored in the specific person storage section 143, the control section 100 determines that the face stored in the frame storage section 142 is not the face of a specific person stored in the specific person storage section 143 (Act S62: No). Then, the control section 100 sets the identical face flag stored in the memory unit 14 to be '0' (Act S64).

Returning to Fig. 7, the control section 100 compares the face in the frame currently stored in the part portion 1427 of the frame storage section 142 with that in the frame previously stored in the part portion 1427 of the frame storage section 142 (Act S17). That is, the control section 100 searches or retrieves whether or not the face image of the person recognized from the frame currently stored in the part portion 1427 is contained in the frames previously stored in the part portion 1427. The control section 100 determines whether or not there is an identical face according to the result of the search (Act S18), if it is determined that there is an identical face (Act S18: Yes), the control section 100 stores the frame number of the frame in the frame number portion 1442 of the tracking storage section 144 in correspondence with the person (Act S19), otherwise (Act S18: No), the control section 100 skips Act S19.

Then, the control section 100 determines whether or not the tracked face images in the frame number portion 1442 of the tracking storage section 144 include a substantially front image (Act S20). The memory unit 14 stores a standard face image taken from the front side of a person in advance. The standard face image is an expressionless face image. The control section 100 compares the tacked face image stored in the frame number portion 1442 of the tracking storage section 144 with the standard face image stored in the memory unit 14. Then, the control section 100 determines whether or not the tracked face images in the frame number portion 1442 of the tracking storage unit 144 include a substantially front image by determining whether or not the face images stored in the frame number portion 1442 include an image substantially the same as the standard face image facing the front side direction. Further, in executing Act S20, the control section 100 also takes into account whether or not the face in the compared image is expressionless in the determination in Act S17. An expressionless face image is determined as a more front image.

If it is determined that the tracked face images stored in the frame number portion 1442 of the tracking storage unit 144 include no substantially front images (Act S20: No), the control section 100 sets the front side flag stored in the memory unit 14 to be '1' (Act S21). If it is determined that the tracked face images stored in the frame number portion 1442 of the tracking storage unit 144 include a substantially front image (Act 20: Yes), the control section 100 sets the front side flag stored in the memory unit 14 to be '0' (Act S22). The control section 100 returns to execute Act S11 after executing Act S21 or S22.

In this way, according to the embodiment, if the distance flag is '1', that is, if the distance between the plurality of face images captured in one frame is shorter than a specific distance, the control section 100 changes the frame rate at which frames are input from the specific time A to the specific time B shorter than the time A so as to input frames at shorter intervals and then performs a face analysis processing on each frame. Consequentially, a plurality of face images can be tracked more correctly even if the plurality of face images are overlapped with each other.

Further, in the embodiment, if the identical face flag is '1', the control section 100 determines that one of the specific persons stored in the specific person storage section 143 is recognized. Then, the control section 100 changes the interval at which frames are input from the specific time A to the specific time B shorter than the time A, so as to input frames at shorter intervals and then analyzes the faces in each frame. Thus, more face images of the specific person can be tracked more accurately.

Further, in the embodiment, if the front side flag is '1', the control section 100 determines that the face images stored in the specific tracking storage section 144 include no substantially front images. Then, the control section 100 changes the interval at which frames are input from the specific time A to the specific time B shorter than the time A, so as to input frames at shorter intervals and then analyzes the faces in each frame. Then, there is more possibility that face image of a person is captured from the front side thereof.

Although embodiments are described above, these embodiments are illustrated as examples but not as limitations to the scope of the present invention.

Novel embodiments may be embodied in a variety of other forms; furthermore, various omissions, substitutions, variations or combinations may be devised without departing from the scope of the claims

For example, in the embodiment, the specific time B is exemplarily set to be 100ms, however, to improve recognition accuracy, a lower frame rate may be adopted.

Further, in the embodiment, the identical face flag is set to be '1' if all the face parts, including eyes, nose, mouth, jaw and the like, stored in the frame storage section 142 are identical to those of any one of the persons stored in the specific person storage section 143, however, the identical face flag may be set to be '1' if the face parts are partially identical. For example, the identical face flag may be set to be '1' if the several face parts are identical to a certain extent.

Further, in the embodiment, whether or not the face in a face image is expressionless is taken into account in the setting of the front side flag to be '1' , however, it is not necessary to take into account whether or not the face in a face image is expressionless.

Further, in the embodiment a frame rate is changed by changing the interval at which the images taken by the camera 3 are input from the specific time A to the specific time B, however, the frame rate may also be changed by changing the image capturing timing of the camera 3.

Further, the programs executed by the SC 1 of the embodiment may be preinstalled in a computer-readable recording medium such as a CD-ROM, a Floppy Disc (FD), a CD-R and a Digital Versatile Disk (DVD) as installable or executable files.

Further, the programs executed by the SC 1 in the embodiment may be stored in a computer connected with a network such as the Internet and downloaded into the SC1 from the network. Further, the program executed by the SC 1 may be provided or delivered by a network such as the Internet

Moreover, the programs executed by the SC 1 may be pre-stored in, for example, the ROM 12.

## Claims

1. A face recognition apparatus, comprising:
an image input unit configured to input images captured by a camera at a first frame rate or a second frame rate higher than the first frame rate, the first frame rate
having a first time interval at which images are input, the second frame rate having a second time interval at which images are input, the first time interval being larger than the second time interval;
a face recognition unit configured to recognize the face of a person contained in the input images; and
a control unit configured to change a time interval at which images are input, from the first time interval of the first frame rate to the second time interval of the second frame rate, if a specific condition on the tracking of the face recognized from the images input at the first frame rate is met;
**characterized in that**
the control unit is configured to determine that the specific condition is met if it is determined a first condition that the recognized faces of more than two persons contained in the same image input at the first frame rate are within a given distance; and
the face recognition apparatus further comprises:
a face tracking unit configured to track, if the recognized face is identical to a recognized face contained in the images input thereafter; and
a front face determination unit configured to determine whether or not the recognized face is photographed from the front side of a person,
wherein the control unit further determines that the specific condition is met if the front face determination unit determines a second condition that the recognized face is not photographed from the front side of a person,
the control unit being configured to change the time interval at which images are input from the first frame rate to the second frame rate only if both the first condition and the second condition are met.

2. The face recognition apparatus according to claim 1, further comprising:
a calculation unit configured to count the number of pixels constituting the face; and a number of pixels determination unit configured to determine whether or not a difference between the numbers of pixels constituting the recognized faces of the more than two persons is above a specified value,
wherein the control unit determines that the specific condition is not met if it is further determined in the first specific condition that the difference between the numbers of pixels constituting the recognized faces of the more than two persons is above the specified value.

3. The face recognition apparatus according to claim 1 or 2, further comprising:
a specific face storage unit configured to store the face of a specific person; and
a specific face determination unit configured to determine whether or not the face recognized by the face recognition unit is identical to the stored face of the specific person, wherein the control unit determines that the specific condition is met if the specific face determination unit determines that the face recognized by the face recognition unit is identical to the face of the specific person.

4. A method for recognizing a face, including:
inputting images captured by a camera at a first frame rate or a second frame rate higher than the first frame rate, the first frame rate having a first time interval at which images are input, the second frame rate having a second time interval at which images are input, the first time interval being larger than the second time interval;
recognizing the face of a person contained in the input images; and changing an interval at which images are input from the first frame rate to the second frame rate if a specific condition on the tracking of the face recognized from the images input at the first frame rate is met;
**characterized in that**
the method further comprises:
determining that the specific condition is met if it is determined a first condition that the recognized faces of more than two persons contained in the same image input at the first frame rate are within a given distance;
tracking a face by tracking, if the recognized face is identical to a recognized face contained in the images input thereafter; determining a front face by determining whether or not the recognized face is photographed from the front side of a person; and
further determining that the specific condition is met if the recognized face is determined as being not photographed from the front side of a person at the front face determining step;
changing the interval at which images are input from the first frame rate to the second frame rate only if both the first condition and the second condition are met.

5. The method for recognizing a face according to claim 4 further comprising:
calculating by counting the number of pixels constituting the face;
determining a number of pixels by determining whether or not a difference between the numbers of pixels constituting the recognized faces of the more than two persons is above a specified value; and
determining that the specific condition is not met if it is determined that the difference between the numbers of pixels constituting the recognized faces of the more than two persons is above the specified value.

6. The method for recognizing a face according to claim 4 or 5 further comprising:
storing a specific face by storing the face of a specific person;
determining a specific face by determining whether or not the face recognized at the face recognizing step is identical to the stored face of the specific person; and
determining that the specific condition is met if, at the determining a specific face step, the face recognized at the face recognizing step is determined as identical to the face of the specific person.

7. A computer program for performing the method according to any one of claims 4 to 6 on a computer.

## Patentansprüche

1. Vorrichtung zur Gesichtserkennung, Folgendes umfassend:
eine Bildeingabeeinheit, die dafür konfiguriert ist, Bilder einzugeben, die von einer Kamera mit einer ersten Bildfrequenz oder einer zweiten Bildfrequenz, die höher als die erste Bildfrequenz ist, aufgenommen werden, wobei die erste Bildfrequenz ein erstes Zeitintervall aufweist, in dem Bilder eingegeben werden, die zweite Bildfrequenz ein zweites Zeitintervall aufweist, in dem Bilder eingegeben werden, wobei das erste Zeitintervall größer als das erste Zeitintervall ist,
eine Gesichtserkennungseinheit, die dafür konfiguriert ist, das Gesicht einer Person zu erkennen, das in den eingegebenen Bildern enthalten ist, und
eine Steuereinheit, die dafür konfiguriert ist, ein Zeitintervall, mit dem Bilder eingegeben werden, von dem ersten Zeitintervall der ersten Bildfrequenz in das zweite Zeitintervall der zweiten Bildfrequenz zu ändern, wenn eine spezifische Bedingung beim Nachverfolgen des Gesichts, das aus den Bildern erkannt wird, die mit der ersten Bildfrequenz eingegeben werden, erfüllt ist,
**dadurch gekennzeichnet, dass**
die Steuereinheit dafür konfiguriert ist zu bestimmen, dass die spezifische Bedingung erfüllt ist, wenn eine erste Bedingung bestimmt wird, dass sich die erkannten Gesichter von mehr als zwei Personen, die in demselben, mit der gleichen Bildfrequenz eingegebenen Bild enthalten sind, innerhalb einer gegebenen Entfernung befinden, und
die Vorrichtung zur Gesichtserkennung ferner Folgendes umfasst:
eine Gesichtsnachverfolgungseinheit, die dafür konfiguriert ist, nachzuverfolgen, wenn das erkannte Gesicht identisch mit einem erkannten Gesicht ist, das in den danach eingegebenen Bildern enthalten ist, und
eine Frontalgesichtsbestimmungseinheit, die dafür konfiguriert ist zu bestimmen, ob das erkannte Gesicht einer Person frontal fotografiert ist oder nicht,
wobei die Steuereinheit ferner bestimmt, dass die spezifische Bedingung erfüllt ist, wenn eine zweite Bedingung bestimmt wird, dass das erkannte Gesicht der Person nicht frontal fotografiert ist,
wobei die Steuereinheit dafür konfiguriert ist, das Zeitintervall, in dem Bilder eingegeben werden, nur dann von der ersten Bildfrequenz in die zweite Bildfrequenz zu ändern, wenn sowohl die erste Bedingung als auch die zweite Bedingung erfüllt ist.

2. Vorrichtung zur Gesichtserkennung nach Anspruch 1, ferner Folgendes umfassend:
eine Berechnungseinheit, die dafür konfiguriert ist, die Anzahl der Pixel zu zählen, die das Gesicht bilden, und
eine Pixelanzahlbestimmungseinheit, die dafür konfiguriert ist zu bestimmen, ob eine Differenz zwischen der jeweiligen Anzahl der Pixel, welche die erkannten Gesichter der mehr als zwei Personen bilden, über einem festgelegten Wert liegt oder nicht,
wobei die Steuereinheit bestimmt, dass die spezifische Bedingung nicht erfüllt ist, wenn in der ersten spezifischen Bedingung ferner bestimmt wird, dass die Differenz zwischen der jeweiligen Anzahl der Pixel, welche die erkannten Gesichter der mehr als zwei Personen bilden, über dem festgelegten Wert liegt.

3. Vorrichtung zur Gesichtserkennung nach Anspruch 1 oder 2, ferner Folgendes umfassend:
eine Einheit zum Speichern spezifischer Gesichter, die dafür konfiguriert ist, das Gesicht einer spezifischen Person zu speichern, und
eine Einheit zum Bestimmen spezifischer Gesichter, die dafür konfiguriert ist zu bestimmen, ob das Gesicht, das von der Gesichtserkennungseinheit erkannt wird, identisch mit dem gespeicherten Gesicht der spezifischen Person ist oder nicht, wobei die Steuereinheit bestimmt, dass die spezifische Bedingung erfüllt ist, wenn die Einheit zum Bestimmen spezifischer Gesichter bestimmt, dass das Gesicht, das von der Gesichtserkennungseinheit erkannt wird, identisch mit dem Gesicht der spezifischen Person ist.

4. Verfahren zum Erkennen eines Gesichts, Folgendes beinhaltend:
Eingeben von Bildern, die von einer Kamera mit einer ersten Bildfrequenz oder einer zweiten Bildfrequenz, die höher als die erste Bildfrequenz ist, aufgenommen werden, wobei die erste Bildfrequenz ein erstes Zeitintervall aufweist, in dem Bilder eingegeben werden, und die zweite Bildfrequenz ein zweites Zeitintervall aufweist, in dem Bilder eingegeben werden, wobei das erste Zeitintervall größer als das erste Zeitintervall ist,
Erkennen des Gesichts einer Person, das in den eingegebenen Bildern enthalten ist, und
Ändern eines Zeitintervalls, mit dem die Bilder eingegeben werden, von dem ersten Zeitintervall der ersten Bildfrequenz in das zweite Zeitintervall der zweiten Bildfrequenz, wenn eine spezifische Bedingung beim Nachverfolgen des Gesichts, das aus den Bildern erkannt wird, die mit der ersten Bildfrequenz eingegeben werden, erfüllt ist,
**dadurch gekennzeichnet, dass**
das Verfahren ferner Folgendes umfasst:
Bestimmen, dass die spezifische Bedingung erfüllt ist, wenn eine erste Bedingung bestimmt wird, dass sich die erkannten Gesichter von mehr als zwei Personen, die in demselben, mit der gleichen Bildfrequenz eingegebenen Bild enthalten sind, innerhalb einer gegebenen Entfernung befinden, und
Nachverfolgen eines Gesichts durch Nachverfolgen, wenn das erkannte Gesicht identisch mit einem erkannten Gesicht ist, das in den danach eingegebenen Bildern enthalten ist, und
Bestimmen eines Frontalgesichts durch Bestimmen, ob das erkannte Gesicht einer Person frontal fotografiert ist oder nicht, und
ferner Bestimmen, dass die spezifische Bedingung erfüllt ist, wenn in dem Frontalgesichtsbestimmungsschritt bestimmt wird, dass das erkannte Gesicht der Person nicht frontal fotografiert ist,
Ändern des Zeitintervalls, in dem Bilder eingegeben werden, nur dann von der ersten Bildfrequenz in die zweite Bildfrequenz, wenn sowohl die erste Bedingung als auch die zweite Bedingung erfüllt ist.

5. Verfahren zum Erkennen eines Gesichts nach Anspruch 4, ferner Folgendes umfassend:
Berechnen durch Zählen der Anzahl der Pixel, die das Gesicht bilden,
Bestimmen einer Anzahl der Pixel durch Bestimmen, ob eine Differenz zwischen der jeweiligen Anzahl der Pixel, welche die erkannten Gesichter der mehr als zwei Personen bilden, über einem festgelegten Wert liegt oder nicht, und
Bestimmen, dass die spezifische Bedingung nicht erfüllt ist, wenn bestimmt wird, dass die Differenz zwischen der jeweiligen Anzahl der Pixel, welche die erkannten Gesichter der mehr als zwei Personen bilden, über dem festgelegten Wert liegt.

6. Verfahren zum Erkennen eines Gesichts nach Anspruch 4 oder 5, ferner Folgendes umfassend:
Speichern eines spezifischen Gesichts durch Speichern des Gesichts einer spezifischen Person,
Bestimmen eines spezifischen Gesichts durch Bestimmen, ob das Gesicht, das in dem Gesichtserkennungsschritt erkannt wird, identisch mit dem gespeicherten Gesicht der spezifischen Person ist oder nicht, und
Bestimmen, dass die spezifische Bedingung erfüllt ist, wenn in dem Schritt zum Bestimmen eines spezifischen Gesichts bestimmt wird, dass das Gesicht, das in dem Gesichtserkennungsschritt erkannt wird, identisch mit dem Gesicht der spezifischen Person ist.

7. Computerprogramm zum Durchführen des Verfahrens nach einem der Ansprüche 4 bis 6 auf einem Computer.

## Revendications

1. Appareil de reconnaissance faciale, comprenant :
une unité d'entrée d'images configurée de manière à appliquer en entrée des images capturées par une caméra à une première fréquence de trame, ou à une seconde fréquence de trame supérieure à la première fréquence de trame, la première fréquence de trame présentant un premier intervalle de temps au cours duquel des images sont appliquées en entrée, la seconde fréquence de trame présentant un second intervalle de temps au cours duquel les images sont appliquées en entrée, le premier intervalle de temps étant plus grand que le second intervalle de temps ;
une unité de reconnaissance faciale configurée de manière à reconnaître le visage d'une personne contenue dans les images appliquées en entrée ; et
une unité de commande configurée de manière à modifier un intervalle de temps au cours duquel les images sont appliquées en entrée, du premier intervalle de temps de la première fréquence de trame au second intervalle de temps de la seconde fréquence de trame, si une condition spécifique concernant le suivi du visage reconnu à partir des images appliquées en entrée à la première fréquence de trame est satisfaite ;
**caractérisé en ce que** :
l'unité de commande est configurée de manière à déterminer que la condition spécifique est satisfaite lorsqu'est déterminée une première condition selon laquelle les visages reconnus de plus de deux personnes contenues dans la même image appliquée en entrée à la première fréquence de trame se situent à une distance donnée ; et
dans lequel l'appareil de reconnaissance faciale comprend en outre :
une unité de suivi de visage configurée de manière à effectuer un suivi, si le visage reconnu est identique à un visage reconnu contenu dans les images appliquées en entrée subséquemment ; et
une unité de détermination de visage de face configurée de manière à déterminer si le visage reconnu d'une personne est ou non photographié de face ;
dans lequel l'unité de commande détermine en outre que la condition spécifique est satisfaite si l'unité de détermination de visage de face détermine une seconde condition selon laquelle le visage reconnu d'une personne n'est pas photographié de face ;
l'unité de commande est configurée de manière à modifier l'intervalle de temps au cours duquel les images sont appliquées en entrée, de la première fréquence de trame à la seconde fréquence de trame, uniquement si la première condition et la seconde condition sont toutes deux satisfaites.

2. Appareil de reconnaissance faciale selon la revendication 1, comprenant en outre :
une unité de calcul configurée de manière à compter le nombre de pixels constituant le visage ; et
une unité de détermination de nombre de pixels configurée de manière à déterminer si une différence entre les nombres de pixels constituant les visages reconnus des plus de deux personnes est supérieure ou non à une valeur spécifiée ;
dans lequel l'unité de commande détermine que la condition spécifique n'est pas satisfaite s'il est en outre déterminé, dans la première condition spécifique, que la différence entre les nombres de pixels constituant les visages reconnus des plus de deux personnes est supérieure à la valeur spécifiée.

3. Appareil de reconnaissance faciale selon la revendication 1 ou 2, comprenant en outre :
une unité de stockage de visage spécifique configurée de manière à stocker le visage d'une personne spécifique ; et
une unité de détermination de visage spécifique configurée de manière à déterminer si le visage reconnu par l'unité de reconnaissance faciale est identique ou non au visage stocké de la personne spécifique, dans laquelle l'unité de commande détermine que la condition spécifique est satisfaite si l'unité de détermination de visage spécifique détermine que le visage reconnu par l'unité de reconnaissance faciale est identique au visage de la personne spécifique.

4. Procédé de reconnaissance faciale, incluant les étapes ci-dessous consistant à :
appliquer en entrée des images capturées par une caméra à une première fréquence de trame, ou à une seconde fréquence de trame supérieure à la première fréquence de trame, la première fréquence de trame présentant un premier intervalle de temps au cours duquel les images sont appliquées en entrée, la seconde fréquence de trame présentant un second intervalle de temps au cours duquel les images sont appliquées en entrée, le premier intervalle de temps étant plus grand que le second intervalle de temps ;
reconnaître le visage d'une personne contenue dans les images appliquées en entrée ; et
modifier un intervalle au cours duquel les images sont appliquées en entrée, de la première fréquence de trame à la seconde fréquence de trame, si une condition spécifique concernant le suivi du visage reconnu à partir des images appliquées en entrée à la première fréquence de trame est satisfaite ;
**caractérisé en ce que**
le procédé comprend en outre les étapes ci-dessous consistant à :
déterminer que la condition spécifique est satisfaite lorsqu'est déterminée une première condition selon laquelle les visages reconnus de plus de deux personnes contenues dans la même image appliquée en entrée à la première fréquence de trame se situent à une distance donnée ;
suivre un visage en effectuant un suivi, si le visage reconnu est identique à un visage reconnu contenu dans les images appliquées en entrée subséquemment ;
déterminer un visage de face, en déterminant si le visage reconnu d'une personne est ou non photographié de face ;
déterminer en outre que la condition spécifique est satisfaite s'il est déterminé que le visage reconnu de la personne n'a pas été photographié de face à l'étape de détermination du visage de face ; et
modifier l'intervalle avec lequel les images sont appliquées en entrée, de la première fréquence de trame à la seconde fréquence de trame, uniquement si la première condition et la seconde condition sont toutes deux satisfaites.

5. Procédé de reconnaissance faciale selon la revendication 4, comprenant en outre les étapes ci-dessous consistant à :
compter le nombre de pixels constituant le visage ;
déterminer un nombre de pixels, en déterminant si une différence entre les nombres de pixels constituant les visages reconnus des plus de deux personnes est supérieure ou non à une valeur spécifiée ; et
déterminer que la condition spécifique n'est pas satisfaite s'il est déterminé que la différence entre les nombres de pixels constituant les visages reconnus des plus de deux personnes est supérieure à la valeur spécifiée.

6. Procédé de reconnaissance faciale selon la revendication 4 ou 5, comprenant en outre les étapes ci-dessous consistant à :
stocker un visage spécifique en stockant le visage d'une personne spécifique ;
déterminer un visage spécifique en déterminant si le visage reconnu à l'étape de reconnaissance faciale est identique ou non au visage stocké de la personne spécifique ; et
déterminer que la condition spécifique est satisfaite si, à l'étape de détermination du visage spécifique, le visage reconnu à l'étape de reconnaissance faciale est déterminé comme étant identique au visage de la personne spécifique.

7. Programme informatique destiné à mettre en oeuvre sur un ordinateur le procédé selon l'une quelconque des revendications 4 à 6.
